(19) Europäisches Patentamt

European Patent Office

Office européen des brevets

(11) EP 3 176 217 B1

(12) EUROPEAN PATENT SPECIFICATION

(45) Date of publication and mention of the grant of the patent:
04.12.2019 Bulletin 2019/49

(21) Application number: 15828229.3

(22) Date of filing: 23.07.2015

(51) Int Cl.:
C08L 65/00 (2006.01)  C08J 5/00 (2006.01)
C08L 45/00 (2006.01)  C08L 53/02 (2006.01)
C08F 32/08 (2006.01)  C08L 53/00 (2006.01)

(86) International application number:
PCT/JP2015/071003

(87) International publication number:
WO 2016/017528 (04.02.2016 Gazette 2016/05)

(54) **RESIN MOLDED ARTICLE**

HARZFORMARTIKEL

CORPS MOULÉ EN RÉSINE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 28.07.2014 JP 2014152734

(43) Date of publication of application:
07.06.2017 Bulletin 2017/23

(73) Proprietor: Zeon Corporation
Tokyo 100-8246 (JP)

(72) Inventors:
• YABUKI, Nozomi
Tokyo 100-8246 (JP)
• SAWAGUCHI, Taichi
Tokyo 100-8246 (JP)

(74) Representative: Maiwald Patent- und Rechtsanwaltsgesellschaft mbH
Elisenhof
Elisenstraße 3
80335 München (DE)

(56) References cited:
WO-A1-2013/030944    WO-A1-2014/034200
WO-A1-2014/087935    JP-A- H1 121 413
JP-A- 2004 156 048    JP-A- 2011 202 085
JP-A- 2012 172 136    JP-A- 2015 160 399
US-A- 5 468 803       US-A1- 2009 149 567

• DATABASE WPI Week 200872 Thomson Scientific, London, GB; AN 2008-M23187 XP002778295, & JP 2008 208361 A (KURARAY CO LTD) 11 September 2008 (2008-09-11)
• DATABASE WPI Week 201236 Thomson Scientific, London, GB; AN 2012-G00742 XP002778296, & JP 2012 097146 A (KANEKA CORP) 24 May 2012 (2012-05-24)

Remarks:
The file contains technical information submitted after the application was filed and not included in this specification

**Description**

TECHNICAL FIELD

The present invention relates to a resin formed article that exhibits excellent transparency, excellent impact resistance, and excellent oil resistance.

BACKGROUND ART

In recent years, drug containers and medical instruments made of a synthetic resin have been widely used instead of drug containers and medical instruments made of glass since they have a reduced weight, and can be safely and efficiently disposed of after use by means of incineration or the like.

Drug containers and medical instruments may have a small size, or may have a complex shape. Drug containers and medical instruments are normally disposed of after use without being recycled. Therefore, it is preferable to produce drug containers and medical instruments using a raw material that exhibits excellent formability, and makes it possible to inexpensively mass-produce products having constant quality.

It is considered that a cycloolefin resin is suitable as a raw material for producing drug containers, medical instruments, and the like since a cycloolefin resin exhibits excellent transparency, low hygroscopicity, excellent heat resistance, excellent chemical resistance, and the like.

However, since a cycloolefin resin normally has high rigidity, products made of a cycloolefin resin tend to exhibit inferior impact resistance and inferior durability against a steam sterilization treatment.

Patent Literature 1 discloses a norbornene-based resin composition that includes a norbornene-based resin and an aromatic vinyl-conjugated diene-based elastomer, as well as a packing sheet and the like that are obtained using the resin composition. Patent Literature 2 discloses a film that is obtained by forming a thin film using a resin composition that includes a cycloolefin resin and a styrene-based elastomer. Patent Literature 1 and 2 state that the resulting resin formed article exhibits excellent transparency, impact resistance, and the like.

Patent Literature 3 discloses a resin composition which comprises 50 to 99 weight% of a norbornene polymer and 1 to 50 weight% of a hydrogenated styrene thermoplastic elastomer, wherein a content of a low-molecular weight component, which has a weight average molecular weight of 1000 or less, is 3 weight% or less.

Patent Literature 4 is concerned with a transparent cycloolefin copolymer resin composition containing 100 parts by weight of (A) a cycloolefin copolymer and 1 to 50 parts by weight of (B) an isobutylene block copolymer that is composed of (a) a polymer block that is mainly composed of an aromatic vinyl compound and (b) a polymer block that is mainly composed of isobutylene.

Patent Literature 5 discloses a heat-resistant transparent film which has an internal haze value of 1.0% or less and contains a cyclic olefin resin having a refractive index of nl and a glass transition temperature of 170°C or more and a styrene elastomer that has a refractive index of n2 so that $\Delta n = |n2-n1|$ is 0.012 or less.

Patent Literature 6 discloses a transparent cycloolefin-based copolymer resin composition comprising 100 parts by weight of (A) a cycloolefin-based copolymer, 1-50 parts by weight of (B) an aromatic vinyl-isobutylene-based copolymer, and 1-50 parts by weight of (C) a hydrogenated product of an aromatic vinyl-conjugated diene-based copolymer containing 50-70 weight% of an aromatic vinyl segment, wherein the differences of refractive indices (nD) at 23°C between the component (A) and the component (B) and between the component (A) and the component (C) are 0.015 or less.

Patent Literature 7 discloses a cycloolefin-based copolymer resin composition comprising 100 parts by weight of (A) a cycloolefin-based copolymer and 1-100 parts by weight of (B) at least one kind of rubbery polymer selected from (B1) an aromatic vinyl-isobutylene copolymer and (B2) an aromatic vinyl-conjugated diene copolymer, wherein the component (A) and the component (B) have a difference of ≤ 0.015 between their refractive indices (nD) at 20°C, and the dispersion particle diameter of the component (B) in the component (A) is 0.4-3 μm.

Patent Literature 8 relates to a cyclic olefin-based resin composition film being a thinly formed film of the resin composition consisting of (A) a cyclic olefin-based resin and (B) a styrene-based elastomer with a difference between the refractive index of (A) the cyclic olefin-based resin and that of (B) the styrene-based elastomer being ±0.02 or less and with a weight% ratio of (A) the cyclic olefin-based resin/(B) the styrene-based elastomer being 99/1 to 50/50.

Further, Patent Literature 9 relates to a specific polymer composition comprising 60 to 95 mass% of (a) a β-pinene polymer having a specific gravity of 0.85 to less than 1.0 and a glass transition temperature of ≥80°C, and 5 to 40 mass% of (b) one or more soft polymer(s), wherein the refractive index difference is ≤0.005 between the refractive index of the soft polymer and the refractive index of the β-pinene polymer, wherein the total light transmittance is ≥70%.

Patent Literature 10 discloses a transparent thermoplastic norbornene polymer composition comprising a thermoplastic norbornene polymer having a number average molecular weight of 10,000-200,000 as determined by gel permeation chromatographic analysis in toluene, said norbornene polymer containing 0.01 to 10% by weight of a compounding ingredient in the form of a polymeric elastomer dispersed as microdomains in the norbornene polymer.

Patent Literature 11 discloses a transparent cycloolefinic copolymer resin composition comprising 100 parts by weight of (A) a cycloolefin-based copolymer, 1 to 50 parts by weight of (B) an isobutylene-based block copolymer consisting of (a) a polymer block containing an aromatic vinyl-based compound and (b) a polymer block containing isobutylene, wherein (B) contains 60 to 99% by weight of a triblock component with a structure (a)-(b)-(a) and 1 to 40% by weight of a diblock component with a structure (a)-(b).

CITATION LIST

PATENT LITERATURE

Patent Literature 1: JP-A-10-95881
Patent Literature 2: JP-A-2004-156048
Patent Literature 3: WO 2014/087935 A1
Patent Literature 4: WO 2013/030944 A1
Patent Literature 5: WO 2014/034200 A1
Patent Literature 6: JP-A-2011-202085
Patent Literature 7: JP-A-H11-21413
Patent Literature 8: JP-A-2004-156048
Patent Literature 9: JP-A-2008-208361
Patent Literature 10: US 5 468 803 A
Patent Literature 11: JP-A-2012-097146

SUMMARY OF INVENTION

TECHNICAL PROBLEM

It is possible to improve impact resistance while maintaining excellent transparency by combining a styrene-based elastomer with a cycloolefin resin (see Patent Literature 1 and 2).

However, drug containers and medical instruments obtained using the resin compositions disclosed in Patent Literature 1 and 2 do not sufficiently meet the desired performance.

The invention was conceived in view of the above situation. An object of the invention is to provide a resin formed article that exhibits excellent transparency, excellent impact resistance, and excellent oil resistance.

SOLUTION TO PROBLEM

In order to solve the above problem, the inventors conducted extensive studies with regard to a resin formed article that is obtained by forming a resin composition that includes a cycloolefin resin and a styrene-based thermoplastic elastomer. As a result, the inventors found that a resin formed article that is obtained by forming a resin composition prepared by appropriately combining a cycloolefin resin with a styrene-based thermoplastic elastomer that has a weight average molecular weight within a specific range, and has a small difference in refractive index ($\Delta$nD) with respect to the cycloolefin resin, exhibits excellent transparency, excellent impact resistance, and excellent oil resistance. This finding has led to the completion of the invention.

One aspect of the invention provides the following resin formed article (see (1) to (3)).

(1) A resin formed article obtained by forming a resin composition that includes a cycloolefin resin and a styrene-based thermoplastic elastomer,
the styrene-based thermoplastic elastomer having a weight average molecular weight (Mw) of 20,000 to 150,000, and having a difference in refractive index ($\Delta$nD) of more than -0.002 to less than +0.002 with respect to the cycloolefin resin,
the refractive indices of the cycloolefin resin and the styrene-based thermoplastic elastomer being measured by applying light having a wavelength of 587.6 nm at 25°C,
the resin composition having a residual ratio of 0.10 wt% or less when analyzed based on the residue on ignition test method specified in the Japanese Pharmacopeia,
the resin composition having a light transmittance (optical path length: 3 mm) of 55% or more with respect to light having a wavelength of 450 nm when the resin composition is formed in the shape of a sheet having a thickness of 3.0 mm, and subjected to light transmittance measurement, and

the resin composition having a Charpy impact strength of 5 to 40 kJ/m$^2$ when the resin composition is formed to have a thickness of 4.0 mm, a length of 80.0 mm, and a width of 10.0 mm, and subjected to the notched Charpy impact test specified in JIS K 7111-1 at 23°C.

(2) The resin formed article according to (1), wherein the styrene-based thermoplastic elastomer is a block copolymer or a hydrogenated product thereof, the block copolymer including a block (A) that includes a repeating unit derived from a styrene-based monomer, and a block (B1) that includes a repeating unit derived from isobutylene, or a block (B2) that includes a repeating unit derived from a conjugated diene-based monomer.

(3) The resin formed article according to (1) or (2), wherein the resin composition includes the cycloolefin resin and the styrene-based thermoplastic elastomer in a weight ratio (cycloolefin resin:styrene-based thermoplastic elastomer) of 98:2 to 40:60.

ADVANTAGEOUS EFFECTS OF INVENTION

One aspect of the invention thus provides a resin formed article that exhibits excellent transparency, excellent impact resistance, and excellent oil resistance.

DESCRIPTION OF EMBODIMENTS

A resin formed article according to one embodiment of the invention is obtained by forming a resin composition that includes a cycloolefin resin and a styrene-based thermoplastic elastomer, and is characterized by meeting the following requirements (i), (ii), (iii), and (iv).

(i) The styrene-based thermoplastic elastomer has a weight average molecular weight (Mw) of 20,000 to 150,000, and has a difference in refractive index (ΔnD) of more than -0.002 to less than +0.002 with respect to the cycloolefin resin, the refractive indices of the cycloolefin resin and the styrene-based thermoplastic elastomer being measured by applying light having a wavelength of 587.6 nm at 25°C.

(ii) The resin composition has a residual ratio of 0.10 wt% or less when analyzed based on the residue on ignition test method specified in the Japanese Pharmacopeia.

(iii) The resin composition has a light transmittance (optical path length: 3 mm) of 55% or more with respect to light having a wavelength of 450 nm when the resin composition is formed in the shape of a sheet having a thickness of 3.0 mm, and subjected to light transmittance measurement.

(iv) The resin composition has a Charpy impact strength of 5 to 40 kJ/m$^2$ when the resin composition is formed to have a thickness of 4.0 mm, a length of 80.0 mm, and a width of 10.0 mm, and subjected to the notched Charpy impact test specified in JIS K 7111-1 at 23°C.

Cycloolefin resin

The cycloolefin resin used in connection with one embodiment of the invention is a polymer that has an alicyclic structure in the molecule, and is obtained by effecting a polymerization reaction using a cycloolefin as a monomer, or a hydrogenated product thereof.
Examples of the alicyclic structure included in the cycloolefin resin include a cycloalkane structure and a cycloalkene structure. It is preferable that the alicyclic structure included in the cycloolefin resin be a cycloalkane structure since a resin formed article that exhibits excellent light resistance, durability, and the like is easily obtained. The number of carbon atoms included in the alicyclic structure is not particularly limited, but is normally 4 to 30, preferably 5 to 20, and still more preferably 5 to 15.
The weight average molecular weight (Mw) of the cycloolefin resin is preferably 20,000 to 100,000, and more preferably 25,000 to 50,000. If the weight average molecular weight (Mw) of the cycloolefin resin is too low, the strength of the resin formed article may decrease. If the weight average molecular weight (Mw) of the cycloolefin resin is too high, the compatibility of the cycloolefin resin with the styrene-based thermoplastic elastomer may decrease.
The molecular weight distribution (Mw/Mn) of the cycloolefin resin is not particularly limited, but is preferably 1 to 5, and more preferably 1 to 4.
When the molecular weight distribution of the cycloolefin resin is within the above range, it is possible to obtain a resin formed article that exhibits sufficient mechanical strength.

The weight average molecular weight (Mw) and the number average molecular weight (Mn) of the cycloolefin resin refer to a standard polyisoprene-equivalent weight average molecular weight and a standard polyisoprene-equivalent number average molecular weight determined by gel permeation chromatography (GPC) (eluent: cyclohexane).

The refractive index of the cycloolefin resin is normally 1.500 to 1.600, and preferably 1.530 to 1.550.

The term "refractive index" used herein refers to a value measured at 25°C while applying light having a wavelength of 587.6 nm.

When the refractive index of the cycloolefin resin is within the above range, it is possible to easily reduce the difference in refractive index ($\Delta nD$) between the cycloolefin resin and the styrene-based thermoplastic elastomer.

There is a tendency that the refractive index of the cycloolefin resin is affected by the number of rings included in the molecule. For example, a cycloolefin resin having a high refractive index is easily obtained when a monomer that includes a number of rings (e.g., tricyclic monomer and tetracyclic monomer described later) is used as a cycloolefin monomer that is used to synthesize the cycloolefin resin.

Examples of the cycloolefin resin used in connection with one embodiment of the invention include a ring-opening polymer of a cycloolefin monomer (hereinafter may be referred to as "polymer ($\alpha$)"), a hydrogenated product thereof, an addition polymer produced using a cycloolefin monomer (hereinafter may be referred to as "polymer ($\beta$)") and a hydrogenated product thereof.

A hydrogenated product of the polymer ($\alpha$) is preferable as the cycloolefin resin since a hydrogenated product of the polymer ($\alpha$) exhibits excellent properties in a well-balanced manner, and the desired resin formed article is easily obtained.

(1) Polymer ($\alpha$) and hydrogenated product thereof

The cycloolefin monomer that is used to produce the polymer ($\alpha$) and a hydrogenated product thereof is a compound that has a cyclic structure formed by carbon atoms, and includes a carbon-carbon double bond in the cyclic structure (ring). Specific examples of the cycloolefin monomer include a norbornene-based monomer. When the polymer ($\alpha$) is a copolymer, a monocyclic olefin may be used as the cycloolefin monomer.

The term "norbornene-based monomer" used herein refers to a monomer that includes a norbornene ring.

Examples of the norbornene-based monomer include a bicyclic monomer such as bicyclo[2.2.1]hept-2-ene (trivial name: norbornene), 5-ethylidenebicyclo[2.2.1]hept-2-ene (trivial name: ethylidenenorbornene) and a derivative thereof (that includes a substituent on a ring); a tricyclic monomer such as tricyclo[4.3.0.1$^{2,5}$]deca-3,7-diene (trivial name: dicyclopentadiene) and a derivative thereof; and a tetracyclic monomer such as 7,8-benzotricyclo[4.3.0.1$^{2,5}$]dec-3-ene (trivial name: methanotetrahydrofluorene (also referred to as "tetracyclo[7.4.0.0$^{2,7}$.1$^{10,13}$]trideca-2,4,6,11-tetraene")) and a derivative thereof, tetracyclo[4.4.0.1$^{2,5}$.1$^{7,10}$]dodec-3-ene (trivial name: tetracyclododecene), and 8-ethylidenetetracyclo[4.4.0.1$^{2,5}$.1$^{7,10}$]-3-dodecene and a derivative thereof.

These monomers may be substituted with a substituent at an arbitrary position. Examples of the substituent include an alkyl group such as a methyl group and an ethyl group; an alkenyl group such as a vinyl group; an alkylidene group such as a propan-2-ylidene; an aryl group such as a phenyl group; a hydroxy group; an acid anhydride group; a carboxy group; and an alkoxycarbonyl group such as a methoxycarbonyl group.

Examples of the monocyclic olefin include a cyclic monoolefin such as cyclobutene, cyclopentene, methylcyclopentene, cyclohexene, methylcyclohexene, cycloheptene, and cyclooctene; and a cyclic diolefin such as cyclohexadiene, methylcyclohexadiene, cyclooctadiene, methylcyclooctadiene, and phenylcyclooctadiene.

These cycloolefin monomers may be used either alone or in combination.

When two or more cycloolefin monomers are used, the polymer ($\alpha$) may be a block copolymer, or may be a random copolymer.

Among these, tricyclo[4.3.0.1$^{2,5}$]deca-3,7-diene, 8-methyltetracyclo[4.4.0.1$^{2,5}$.1$^{7,10}$]dodec-3-ene, and tetracyclo[7.4.0.0$^{2,7}$.1$^{10,13}$]trideca-2,4,6,11-tetraene are preferable as the cycloolefin monomer.

The polymer ($\alpha$) may be produced using a known method that utilizes a metathesis polymerization catalyst.

The metathesis polymerization catalyst is not particularly limited. A known metathesis polymerization catalyst may be used. Examples of the metathesis polymerization catalyst include a catalyst system that includes a halide, a nitrate, or an acetylacetone compound of a metal selected from ruthenium, rhodium, palladium, osmium, iridium and platinum and a reducing agent; a catalyst system that includes a halide or an acetylacetone compound of a metal selected from titanium, vanadium, zirconium, tungsten, and molybdenum, and an organoaluminum compound (promoter); and a Schrock-type or Grubbs-type living ring-opening metathesis polymerization catalyst (see JP-A-7-179575, J. Am. Chem. Soc., 1986, 108, p. 733, J. Am. Chem. Soc., 1993, 115, p. 9858, and J. Am. Chem. Soc., 1996,118, p. 100).

These metathesis polymerization catalysts may be used either alone or in combination.

The metathesis polymerization catalyst may be used in an appropriate amount taking account of the polymerization conditions and the like. The metathesis polymerization catalyst is normally used in an amount of 0.000001 to 0.1 mol, and preferably 0.00001 to 0.01 mol, based on 1 mol of the cycloolefin monomer.

A linear $\alpha$-olefin having 4 to 40 carbon atoms (e.g., 1-butene, 1-hexene, and 1-decene) may be used as a molecular weight modifier when subjecting the cycloolefin monomer to ring-opening polymerization.

The linear $\alpha$-olefin is normally added in an amount of 0.001 to 0.030 mol, preferably 0.003 to 0.020 mol, and more preferably 0.005 to 0.015 mol, based on 1 mol of the cycloolefin monomer.

The cycloolefin monomer may be subjected to ring-opening polymerization in an organic solvent. The organic solvent is not particularly limited as long as the organic solvent is inert to the polymerization reaction. Examples of the organic solvent include an aromatic hydrocarbon-based solvent such as benzene, toluene, and xylene; an aliphatic hydrocarbon-based solvent such as n-pentane, n-hexane, and n-heptane; an alicyclic hydrocarbon-based solvent such as cyclohexane, methylcyclohexane, decalin, and bicyclononane; a halogenated hydrocarbon-based solvent such as dichloroethane, chlorobenzene, dichlorobenzene, and trichlorobenzene; and a mixed solvent that includes two or more solvents among these solvents.

The polymerization temperature is not particularly limited, but is normally -50 to 250°C, preferably -30 to 200°C, and more preferably -20 to 150°C. The polymerization time is appropriately selected taking account of the polymerization conditions, but is normally 30 minutes to 20 hours, and preferably 1 to 10 hours.

A hydrogenated product of the polymer ($\alpha$) can be obtained by subjecting the polymer ($\alpha$) produced as described above to a hydrogenation reaction.

The polymer ($\alpha$) may be subjected to a hydrogenation reaction by bringing the polymer ($\alpha$) into contact with hydrogen in accordance with an ordinary method in the presence of a hydrogenation catalyst.

The hydrogenation catalyst may be a homogeneous catalyst, or may be a heterogeneous catalyst.

A homogeneous catalyst has an advantage in that it is easily dispersed in a hydrogenation reaction mixture, and the amount of catalyst to be added can be reduced. Since a homogeneous catalyst exhibits sufficient activity even when the temperature and the pressure are increased to a large extent, decomposition and gelation of the polymer ($\alpha$) and a hydrogenated product thereof do not easily occur. Therefore, a homogeneous catalyst is selected from the viewpoint of cost and the quality of the product.

A heterogeneous catalyst has an advantage in that it exhibits particularly excellent activity at a high temperature under high pressure, and the polymer ($\alpha$) can be hydrogenated within a short time. Moreover, a catalyst residue can be efficiently removed after completion of the hydrogenation reaction.

In particular, it is possible to sufficiently remove a catalyst residue and the like that are included in the cycloolefin resin as impurities, and easily obtain a resin formed article in which the amount of residue (measured in accordance with the residue on ignition test method specified in the Japanese Pharmacopoeia) is small. Therefore, it is preferable to hydrogenate the polymer ($\alpha$) using a heterogeneous catalyst.

Examples of the homogeneous catalyst include a Wilkinson's complex (chlorotris(triphenylphosphine)rhodium(I)); and a catalyst that includes a combination of a transition metal compound and an alkylmetal compound (e.g., cobalt acetate and triethylaluminum, nickel acetylacetonate and triisobutylaluminum, titanocene dichloride and n-butyllithium, zirconocene dichloride and sec-butyllithium, and tetrabutoxytitanate and dimethylmagnesium).

Examples of the heterogeneous catalyst include a catalyst in which a metal (e.g., Ni, Pd, Pt, Ru, and Rh) is supported on a support. When it is desired to reduce the amount of impurities in the resulting hydrogenated product, it is preferable to use an adsorbent (e.g., alumina and diatomaceous earth) as the support.

The hydrogenation reaction is normally effected in an organic solvent. The organic solvent is not particularly limited as long as the organic solvent is inert to the hydrogenation reaction. A hydrocarbon-based solvent is normally used as the organic solvent since a hydrocarbon-based solvent can easily dissolve the resulting hydrogenated product. Examples of the hydrocarbon-based solvent include an aromatic hydrocarbon-based solvent such as benzene, toluene, and xylene; an aliphatic hydrocarbon-based solvent such as n-pentane, n-hexane, and n-heptane; and an alicyclic hydrocarbon-based solvent such as cyclohexane, methylcyclohexane, decalin, and bicyclononane.

These organic solvents may be used either alone or in combination. A solvent that is used for a ring-opening polymerization reaction is normally also suitable as a solvent for a hydrogenation reaction. Therefore, the hydrogenation catalyst may be added to the ring-opening polymerization reaction mixture, and the resulting mixture may be subjected to the hydrogenation reaction.

The hydrogenation rate varies depending on the type of hydrogenation catalyst, and the reaction temperature. When the polymer ($\alpha$) includes an aromatic ring, the aromatic ring residual ratio can be controlled by appropriately selecting the hydrogenation catalyst, and adjusting the reaction temperature, for example. For example, the unsaturated bonds of an aromatic ring can be allowed to remain to a certain extent by decreasing the reaction temperature, lowering the hydrogen pressure, or reducing the reaction time.

After completion of the hydrogenation reaction, the reaction mixture is subjected to centrifugation, filtration, or the like to remove a catalyst residue. A catalyst deactivation agent (e.g., water and alcohol) may be used, or an adsorbent (e.g., activated clay and alumina) may be added, as required.

(2) Polymer (β) and hydrogenated product thereof

Examples of the cycloolefin monomer that is used to synthesize the polymer (β) and a hydrogenated product thereof include those mentioned above in connection with the cycloolefin monomer that is used to synthesize the polymer (α).

An additional monomer that is copolymerizable with the cycloolefin monomer may be used in combination with the cycloolefin monomer when synthesizing the polymer (β).

Examples of the additional monomer include an α-olefin having 2 to 20 carbon atoms, such as ethylene, propylene, 1-butene, 1-pentene, and 1-hexene; an aromatic vinyl compound such as styrene and α-methylstyrene; and a non-conjugated diene such as 1,4-hexadiene, 4-methyl-1,4-hexadiene, 5-methyl-1,4-hexadiene, and 1,7-octadiene. Among these, an α-olefin is preferable, and ethylene is more preferable.

These additional monomers may be used either alone or in combination.

When subjecting the cycloolefin monomer and the additional monomer to addition copolymerization, the cycloolefin monomer and the additional monomer are normally used in a weight ratio (cycloolefin monomer:additional monomer) of 30:70 to 99:1, preferably 50:50 to 97:3, and more preferably 70:30 to 95:5.

When two or more cycloolefin monomers are used in combination, or when the cycloolefin monomer and the additional monomer are used in combination, the polymer (β) may be a block copolymer, or may be a random copolymer.

The polymer (β) may be synthesized using a known method that utilizes an addition polymerization catalyst.

Examples of the addition polymerization catalyst include a vanadium-based catalyst that is formed using a vanadium compound and an organoaluminum compound, a titanium-based catalyst that is formed using a titanium compound and an organoaluminum compound, and a zirconium-based catalyst that is formed using a zirconium complex and an aluminoxane.

These addition polymerization catalysts may be used either alone or in combination. The addition polymerization catalyst may be used in an appropriate amount taking account of the polymerization conditions and the like. The addition polymerization catalyst is normally used in an amount of 0.000001 to 0.1 mol, and preferably 0.00001 to 0.01 mol, based on 1 mol of the monomer.

The cycloolefin monomer is normally subjected to addition polymerization in an organic solvent. Examples of the organic solvent include those mentioned above in connection with the solvent that is used when subjecting the cycloolefin monomer to ring-opening polymerization.

The polymerization temperature is normally -50 to 250°C, preferably -30 to 200°C, and more preferably -20 to 150°C. The polymerization time is appropriately selected taking account of the polymerization conditions, but is normally 30 minutes to 20 hours, and preferably 1 to 10 hours.

A hydrogenated product of the polymer (β) can be obtained by subjecting the polymer (β) produced as described above to a hydrogenation reaction.

The polymer (β) may be subjected to a hydrogenation reaction in the same manner as the polymer (α) (see above).

Styrene-based thermoplastic elastomer

The styrene-based thermoplastic elastomer that is used in connection with one embodiment of the invention is a block copolymer (thermoplastic elastomer) that includes a block (A) that includes a repeating unit derived from a styrene-based monomer, and a block (B) that includes a repeating unit derived from an additional monomer (hereinafter may be referred to as "polymer (γ)"), wherein the block (A) functions as a hard segment, and the block (B) functions as a soft segment, or a hydrogenated product (thermoplastic elastomer) of the polymer (γ), wherein the hydrogenated block (A) functions as a hard segment, and the hydrogenated block (B) functions as a soft segment.

The block (A) does not necessarily include only the repeating unit derived from a styrene-based monomer. For example, when part of a monomer used for the preceding reaction has remained unreacted in the reaction system, the block (A) may include a repeating unit derived from a monomer other than a styrene-based monomer. The content of the repeating unit derived from a styrene-based monomer in the block (A) is normally 95 mol% or more, and preferably 99 mol% or more.

The above description also applies to the block (B).

The styrene-based monomer that is used to form the block (A) included in the polymer (γ) is a polymerizable aromatic vinyl compound.

The additional monomer that is used to form the block (B) included in the polymer (γ) is not particularly limited as long as the additional monomer can form a soft segment of a thermoplastic elastomer. A known monomer that is used to synthesize a thermoplastic elastomer may be used as the additional monomer.

Specific examples of the styrene-based monomer that is used to form the block (A) and the additional monomer that is used to form the block (B) are described later in connection with the polymer (γ).

The weight average molecular weight (Mw) of the styrene-based thermoplastic elastomer is 20,000 to 150,000, preferably 20,000 to 100,000, and more preferably 30,000 to 80,000. If the weight average molecular weight (Mw) of the styrene-based thermoplastic elastomer is less than 20,000, a resin formed article produced using the styrene-based thermoplastic elastomer tends to exhibit inferior impact resistance and oil resistance. If the weight average molecular weight (Mw) of the styrene-based thermoplastic elastomer exceeds 150,000, a resin formed article produced using the styrene-based thermoplastic elastomer tends to exhibit inferior transparency. Moreover, since a resin composition that includes such a styrene-based thermoplastic elastomer tends to exhibit inferior formability, it may be difficult to produce a resin formed article having a complex shape in a stable manner.

The weight average molecular weight (Mw) of the styrene-based thermoplastic elastomer can be controlled by adjusting the amount of initiator when the polymer ($\gamma$) is produced using the method described later.

The molecular weight distribution (Mw/Mn) of the styrene-based thermoplastic elastomer is not particularly limited, but is preferably 1 to 5, and more preferably 1 to 4.

When the molecular weight distribution of the styrene-based thermoplastic elastomer is within the above range, it is possible to obtain a resin formed article that exhibits sufficient mechanical strength.

The weight average molecular weight (Mw) and the number average molecular weight (Mn) of the styrene-based thermoplastic elastomer refer to a standard polyisoprene-equivalent weight average molecular weight and a standard polyisoprene-equivalent number average molecular weight determined by gel permeation chromatography (GPC) (eluent: cyclohexane).

The styrene-based thermoplastic elastomer used in connection with one embodiment of the invention has a difference in refractive index ($\Delta$nD) of more than -0.002 to less than +0.002, and preferably more than -0.001 to less than +0.001, with respect to the cycloolefin resin, the refractive indices of the cycloolefin resin and the styrene-based thermoplastic elastomer being measured by applying light having a wavelength of 587.6 nm at 25°C.

When a styrene-based thermoplastic elastomer having a difference in refractive index ($\Delta$nD) of more than -0.002 to less than +0.002 is used, it is possible to easily obtain a resin formed article that exhibits excellent transparency.

The difference in refractive index ($\Delta$nD) is calculated using the following expression.

$$\text{Difference in refractive index } (\Delta nD) = (\text{refractive index of cycloolefin resin}) - (\text{refractive index of styrene-based thermoplastic elastomer})$$

The refractive index of the styrene-based thermoplastic elastomer is normally 1.450 to 1.650, and preferably 1.490 to 1.550. When the refractive index of the styrene-based thermoplastic elastomer is within the above range, it is possible to more easily reduce the difference in refractive index between the cycloolefin resin and the styrene-based thermoplastic elastomer.

There is a tendency that the refractive index of the styrene-based thermoplastic elastomer is affected by the amount of repeating unit derived from a styrene-based monomer, and the hydrogenation rate. For example, a styrene-based thermoplastic elastomer having a high refractive index is easily obtained by increasing the amount of repeating unit derived from a styrene-based monomer, and increasing the hydrogenation rate.

Specific examples of the styrene-based thermoplastic elastomer include a block copolymer or a hydrogenated product thereof, the block copolymer including the block (A) that includes a repeating unit derived from a styrene-based monomer, and including a block (B1) that includes a repeating unit derived from isobutylene, or a block (B2) that includes a repeating unit derived from a conjugated diene-based monomer, as the block (B). A block copolymer that includes the block (A) that includes a repeating unit derived from a styrene-based monomer, and includes the block (B1) that includes a repeating unit derived from isobutylene as the block (B), or a hydrogenated product thereof, is preferable as the styrene-based thermoplastic elastomer since a resin formed article that exhibits various properties that are improved in a well-balanced manner is easily obtained when the styrene-based thermoplastic elastomer is mixed with the cycloolefin resin to prepare a resin composition, and a resin formed article is formed using the resin composition.

The styrene-based thermoplastic elastomer or the polymer ($\gamma$) that is used as an intermediate (i.e., a polymer that is subjected to a hydrogenation reaction) for producing the styrene-based thermoplastic elastomer may be produced using an arbitrary method. For example, the polymer ($\gamma$) can be obtained by successively subjecting a monomer that corresponds to each block to cationic polymerization in an inert solvent using a Lewis acid catalyst and an initiator.

Examples of the polymer ($\gamma$) include a block (A)-block (B) polymer, a block (A)-block (B)-block (A) polymer, a block (B)-block (A)-block (B) polymer, a block (A)-block (B)-block (C) polymer and a block (A)-block (C)-block (B) polymer.

Note that the block (C) is a block other than the block (A) and the block (B). When the polymer ($\gamma$) includes a plurality of (two or more) blocks (A), a plurality of (two or more) blocks (B), and a plurality of (two or more) blocks (C), the plurality of blocks (A), the plurality of blocks (B), and the plurality of blocks (C) may respectively be either identical to or different from each other.

Examples of the styrene-based monomer that is used to form the block (A) included in the polymer (γ) include styrene; an alkyl-substituted styrene-based monomer such as α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, and 5-t-butyl-2-methylstyrene; a halogen-substituted styrene-based monomer such as 2-chlorostyrene, 3-chlorostyrene, 4-chlorostyrene, 4-bromostyrene, and 2,4-dibromostyrene; a styrene-based monomer that is substituted with a halogen atom and an alkyl group, such as 2-methyl-4,6-dichlorostyrene; and vinylnaphthalene. These styrene-based monomers may be used either alone or in combination.

Among these, styrene and an alkyl-substituted styrene are preferable, and styrene is particularly preferable, since a resin formed article that exhibits excellent transparency and excellent impact resistance is easily obtained.

Examples of the monomer that is used to form the block (B) included in the polymer (γ) include isobutylene; and a conjugated diene-based monomer such as 1,3-butadiene, isoprene, 2,3-dimethyl-1,3-butadiene, 1,3-pentadiene, 1,3-hexadiene, and 2-chlorol-1,3-butadiene. These monomers may be used either alone or in combination.

Among these, isobutylene is preferable since a resin formed article that exhibits excellent transparency and excellent impact resistance is easily obtained.

The polymer (γ) normally includes the block (A) (or a plurality of blocks (A)) and the block (B) (or a plurality of blocks (B)) in a weight ratio (block (A):block (B)) of 15:85 to 70:30, and preferably 20:80 to 60:40.

Examples of the block (C) that may be included in the polymer (γ) include a block that includes a repeating unit derived from a monomer such as ethylene or an α-olefin (e.g., propylene and 1-butene), and a block that is formed by random polymerization of monomers such as a styrene-based monomer, isobutylene, a conjugated diene-based monomer, ethylene, and an α-olefin.

When the polymer (γ) includes the block (C), the content of the block (C) in the polymer (γ) is preferably 20 wt% or less, and more preferably 15 wt% or less.

Examples of the Lewis acid catalyst that is used to produce the polymer (γ) include titanium tetrachloride, boron trichloride, boron trifluoride, aluminum chloride and tin tetrachloride.

Examples of the initiator that is used to produce the polymer (γ) include a compound that includes an alkoxy group, such as bis(2-methoxy-2-propyl)benzene; a compound that includes an acyl group, such as bis(2-acetoxy-2-propyl)benzene; and a compound that includes a halogen atom, such as bis(2-chloro-2-propyl)benzene and p-dicumyl chloride.

These Lewis acids and initiators may be used either alone or in combination.

The polymer (γ) may be produced in a state in which compounds such as an amine compound (e.g., triethylamine), an ester compound (e.g., ethyl acetate) and an amide compound (e.g., N,N-dimethylacetamide) are present in the reaction system. It is possible to obtain a product having a narrow molecular weight distribution by producing the polymer (γ) in the presence of these compounds.

Examples of the inert solvent used to produce the polymer (γ) include an aliphatic hydrocarbon-based solvent such as n-butane, isobutane, n-pentane, and n-hexane; an aromatic hydrocarbon-based solvent such as benzene, toluene, and xylene; an alicyclic hydrocarbon-based solvent such as cyclopentane and cyclohexane; and a halogenated hydrocarbon-based solvent such as methyl chloride, dichloromethane, chloroform, ethyl chloride, dichloroethane, butyl chloride, and chlorobenzene.

These solvents may be used either alone or in combination.

The polymerization temperature is not particularly limited, but is normally -100 to 0°C, and preferably -80 to -30°C. The polymerization time is appropriately selected taking account of the polymerization conditions, but is normally 30 minutes to 20 hours, and preferably 1 to 10 hours.

The polymer (γ) produced as described above may be isolated and purified in accordance with an ordinary method, and used as the styrene-based thermoplastic elastomer, or may be subjected to a hydrogenation reaction to produce a hydrogenated product of the polymer (γ).

The polymer (γ) may be subjected to a hydrogenation reaction in the same manner as the polymer (α) (see above).

Resin composition

The resin composition used in connection with the invention includes the cycloolefin resin and the styrene-based thermoplastic elastomer.

The resin composition preferably includes the cycloolefin resin and the styrene-based thermoplastic elastomer in a weight ratio (cycloolefin resin:styrene-based thermoplastic elastomer) of 98:2 to 40:60, more preferably 95:5 to 50:50, and still more preferably 90:10 to 70:30.

It is possible to easily obtain a resin formed article that exhibits excellent impact resistance and excellent oil resistance by utilizing the resin composition that includes a sufficient amount of styrene-based thermoplastic elastomer. On the other hand, it is possible to easily obtain a resin formed article that exhibits excellent transparency and is suitable for medical applications by utilizing the resin composition that includes a sufficient amount of cycloolefin resin.

The resin composition used in connection with one embodiment of the invention may include an additional component (e.g., additive) as long as the advantageous effects of the invention are not impaired.

Examples of the additional component include an antioxidant, a UV absorber, a light stabilizer, a near-infrared absorber, a plasticizer, an antistatic agent and an acid scavenger.

Examples of the antioxidant include a phenol-based antioxidant, a phosphorus-based antioxidant and a sulfur-based antioxidant.

Examples of the phenol-based antioxidant include 3,5-di-t-butyl-4-hydroxytoluene, dibutylhydroxytoluene, 2,2'-methylenebis(6-t-butyl-4-methylphenol), 4,4'-butylidenebis(3-t-butyl-3-methylphenol), 4,4'-thiobis(6-t-butyl-3-methyl-phenol), $\alpha$-tocopherol, 2,2,4-trimethyl-6-hydroxy-7-t-butylchroman, tetrakis[methylene-3-(3',5'-di-t-butyl-4'-hydroxyphenyl)propionate]methane and pentaerythritol tetrakis[3-(3,5-di-t-butyl-4-hydroxyphenyl)propionate].

Examples of the phosphorus-based antioxidant include distearylpentaerythritol diphosphite, bis(2,4-di-t-butylphenyl)pentaerythritol diphosphite, tris(2,4-di-t-butylphenyl) phosphite, tetrakis(2,4-di-t-butylphenyl)-4,4'-biphenyl diphosphite and trinonylphenyl phosphite.

Examples of the sulfur-based antioxidant include distearyl thiodipropionate and dilauryl thiodipropionate.

Examples of the UV absorber include a benzotriazole-based UV absorber, a benzoate-based UV absorber, a benzophenone-based UV absorber, an acrylate-based UV absorber and a metal complex-based UV absorber.

Examples of the light stabilizer include a hindered amine-based light stabilizer.

Examples of the near-infrared absorber include a cyanine-based near-infrared absorber, a pyrylium-based infrared absorber, a squarylium-based near-infrared absorber, a croconium-based infrared absorber, an azulenium-based near-infrared absorber, a phthalocyanine-based near-infrared absorber, a dithiol metal complex-based near-infrared absorber, a naphthoquinone-based near-infrared absorber, an anthraquinone-based near-infrared absorber, an indophenol-based near-infrared absorber and an azide-based near-infrared absorber.

Examples of the plasticizer include a phosphoric acid triester-based plasticizer, a fatty acid monobasic acid ester-based plasticizer, a dihydric alcohol ester-based plasticizer and an oxy acid ester-based plasticizer.

Examples of the antistatic agent include a fatty acid ester of a polyhydric alcohol.

Examples of the acid scavenger include magnesium oxide and zinc stearate.

The content of each additional component may be appropriately determined taking account of the object. Each additional component is normally used in a ratio of 0.001 to 5 parts by weight, and preferably 0.01 to 1 part by weight, based on 100 parts by weight of the cycloolefin resin and the styrene-based thermoplastic elastomer in total.

The resin composition used in connection with one embodiment of the invention may be prepared by mixing the components in accordance with an ordinary method. The components may be mixed in an appropriate solvent, or may be mixed (kneaded) in a molten state.

The components may be mixed (kneaded) using a melt mixer such as a single-screw extruder, a twin-screw extruder, a Banbury mixer, a kneader, or a feeder ruder. The mixing (kneading) temperature is preferably 200 to 400°C, and more preferably 240 to 350°C. The components may be mixed (kneaded) after adding the components at a time, or may be mixed (kneaded) while adding the components stepwise.

The resulting mixture may be extruded in the shape of a rod in accordance with an ordinary method, and cut (pelletized) using a strand cutter to have an appropriate length.

The resin composition used in connection with the invention has a residual ratio of 0.10 wt% or less, and preferably 0.08 wt% or less, when analyzed based on the residue on ignition test method specified in the Japanese Pharmacopeia. The lower limit of the residual ratio is not particularly limited, and is preferably as small as possible. The lower limit of the residual ratio is normally 0.05 wt% or more.

A resin formed article that is suitable for medical applications can be obtained by utilizing the resin composition that has a residual ratio of 0.10 wt% or less when analyzed based on the residue on ignition test method specified in the Japanese Pharmacopeia.

A residue that remains when the resin composition is analyzed based on the residue on ignition test method is mainly a metal that is derived from the polymerization catalyst and the hydrogenation catalyst used when synthesizing the cycloolefin resin and the styrene-based thermoplastic elastomer. Therefore, a resin composition having a small residual ratio can be obtained by selecting a catalyst that exhibits higher activity, or sufficiently removing a catalyst residue from the product after completion of the polymerization reaction and the hydrogenation reaction. It is also possible to reduce the amount of catalyst to be used by utilizing a catalyst that exhibits high activity.

The resin composition used in connection with the invention has a light transmittance (optical path length: 3 mm) of 55% or more, preferably 60% or more, and more preferably 70% or more, with respect to light having a wavelength of 450 nm when the resin composition is formed in the shape of a sheet having a thickness of 3.0 mm, and subjected to light transmittance measurement. The upper limit of the light transmittance is not particularly limited, and is preferably as large as possible. The upper limit of the light transmittance is normally 90% or less.

A resin formed article that is suitable for medical applications can be obtained by utilizing the resin composition that has a light transmittance of 55% or more with respect to light having a wavelength of 450 nm.

A cycloolefin resin normally exhibits excellent transparency, and has high light transmittance. However, when a cycloolefin resin is used in combination with a styrene-based thermoplastic elastomer, the transparency of the resulting resin formed article tends to decrease. Therefore, it is necessary to appropriately combine a cycloolefin resin and a styrene-based thermoplastic elastomer.

There is a tendency that the light transmittance of the resin composition increases when the difference in refractive index ($\Delta nD$) between the cycloolefin resin and the styrene-based thermoplastic elastomer is reduced.

There is a tendency that the light transmittance of the resin composition increases when the styrene-based thermoplastic elastomer has a low molecular weight, and the content of the styrene-based thermoplastic elastomer in the resin composition is reduced.

Therefore, the desired resin formed article can be obtained by utilizing a resin composition prepared by selecting (determining) the cycloolefin resin, and then appropriately selecting (adjusting) the repeating units included in the styrene-based thermoplastic elastomer, the weight average molecular weight of the styrene-based thermoplastic elastomer, and the content of the styrene-based thermoplastic elastomer, taking account of other properties such as impact resistance, for example.

The resin composition used in connection with the invention has a Charpy impact strength of 5 to 40 kJ/m$^2$, and preferably 5 to 30 kJ/m$^2$ when the resin composition is formed to have a thickness of 4.0 mm, a length of 80.0 mm, and a width of 10.0 mm, and subjected to the notched Charpy impact test specified in JIS K 7111-1 at 23°C.

A resin formed article obtained using a resin composition having a Charpy impact strength of less than 5 kJ/m$^2$ tends to exhibit inferior impact resistance and oil resistance. A resin formed article obtained using a resin composition having a Charpy impact strength of more than 40 kJ/m$^2$ tends to exhibit low light transmittance, and may not be suitable for medical applications.

A cycloolefin resin normally exhibits inferior impact resistance. It is possible to obtain a resin formed article that exhibits excellent impact resistance without adversely affecting transparency by appropriately combining a styrene-based thermoplastic elastomer having a specific weight average molecular weight with the cycloolefin resin.

A resin formed article that is used in the medical field and the like is normally required to have a small residual ratio when analyzed based on the residue on ignition test method, and exhibit transparency and impact resistance in a well-balanced manner. In order to obtain a resin formed article that exhibits transparency and impact resistance in a well-balanced manner, it is important to use a resin composition that is prepared by appropriately combining a cycloolefin resin and a styrene-based thermoplastic elastomer, and has a small residual ratio when analyzed based on the residue on ignition test method.

Examples of such a resin composition include a resin composition that includes a hydrogenated norbornene-based ring-opening polymer as the cycloolefin resin, and includes a block copolymer that includes the block (A) that includes a repeating unit derived from a styrene-based monomer, and the block (B1) that includes a repeating unit derived from isobutylene, or a hydrogenated product thereof, as the styrene-based thermoplastic elastomer, the resin composition including the hydrogenated norbornene-based ring-opening polymer and the block copolymer or a hydrogenated product thereof in a preferable weight ratio.

Resin formed article

The resin formed article according to one embodiment of the invention is obtained by forming the resin composition described above.

The resin formed article according to one embodiment of the invention may be produced using an arbitrary forming method. Examples of the forming method include an injection forming method, a press forming method, an extrusion forming method and a blow forming method.

The melting temperature employed during forming differs depending on the resin composition, but is normally 200 to 400°C, and preferably 210 to 350°C. When a die is used, the die temperature is normally 20°C to (Tg+15)°C, preferably (Tg-30)°C to (Tg+10)°C, and more preferably (Tg-20)°C to (Tg+5)°C (where, Tg is the glass transition temperature of the resin composition).

A blow forming method is preferably used when producing a container or the like using the resin composition.

The blow forming process may be performed in accordance with an ordinary method. For example, the resin composition is formed in the shape of a sheet, a pipe, or a tube using an injection forming method or an extrusion forming method to obtain a preform, and the preform is blow-formed to obtain the desired container or the like.

The blow ratio employed during blow forming is not particularly limited, but is normally 1.3 to 50, preferably 2 to 30, and more preferably 3 to 10.

Note that the term "blow ratio" used herein refers to a value obtained by dividing the thickness of the parison wall by the thickness of the wall of the container obtained by blow forming. For example, when the average thickness of the parison wall is 5 mm, and the average thickness of the wall of the container obtained by blow forming is 1 mm, the blow ratio is calculated to be 5.

When a resin formed article is produced using a resin composition that is prepared by combining a styrene-based thermoplastic elastomer with a cycloolefin resin in order to improve the impact resistance of a resin formed article that is produced using a cycloolefin resin, there is a tendency that the impact resistance of the resulting resin formed article increases as the weight average molecular weight of the styrene-based thermoplastic elastomer increases.

However, a resin composition prepared using a styrene-based thermoplastic elastomer that has too high a weight average molecular weight tends to exhibit inferior formability, and is not suitable as a raw material for producing a precision part, or a container or the like having a complex shape (see the comparative examples described later).

The resin composition used in connection with one embodiment of the invention can produce a resin formed article that exhibits excellent impact resistance without using a styrene-based thermoplastic elastomer that has too high a weight average molecular weight. Therefore, it is possible to produce the desired resin formed article in a stable manner even when a blow forming method is used as the forming method.

As described above, the resin composition that is used to produce the resin formed article according to one embodiment of the invention includes a specific cycloolefin resin and a specific styrene-based thermoplastic elastomer, has a small residual ratio when analyzed based on the residue on ignition test method specified in the Japanese Pharmacopeia, and produces a sheet-like formed article that has light transmittance and Charpy impact strength within specific ranges.

The resin formed article according to one embodiment of the invention that is obtained using such a resin composition also exhibits excellent oil resistance and excellent formability (see the examples), and is preferably used in the medical field.

Examples of the resin formed article according to one embodiment of the invention include a container such as a drug container, a cosmetic container, and a food container; a medical instrument such as a disposable syringe, an infusion bag, a surgical knife, forceps, and a liquid supply tube; and an experimental instrument such as a Petri dish, a culture vessel, and a disposable pipette.

EXAMPLES

The invention is further described below by way of examples and comparative examples. Note that the invention is not limited to the following examples. The units "parts" and "%" used in connection with the examples and the comparative examples respectively refer to "parts by weight" and "wt%" unless otherwise indicated, and the pressure value used in connection with the examples and the comparative examples refers to a gauge pressure value.

The properties mentioned below were measured as described below.

(1) Weight average molecular weight (Mw) and number average molecular weight (Mn)

The weight average molecular weight (Mw) (standard polyisoprene-equivalent weight average molecular weight) and the number average molecular weight (Mn) (standard polyisoprene-equivalent number average molecular weight) of the cycloolefin resins and the styrene-based thermoplastic elastomers obtained in Production Examples 1 to 5 were determined by gel permeation chromatography (GPC) (eluent: cyclohexane).

(2) Hydrogenation rate

The hydrogenation rate achieved by the hydrogenation reaction effected in Production Example 1 was determined by $^1$H-NMR analysis.

(3) Glass transition temperature (Tg)

In Production Example 1, the glass transition temperature (Tg) was measured as described below in accordance with JIS K 7121 using a differential scanning calorimeter ("DSC6220SII" manufactured by SII Nano Technology Inc.).

Specifically, the specimen was heated to a temperature higher than the glass transition temperature by 30°C or more, cooled to room temperature at a cooling rate of -10°C/min, and heated at a heating rate of 10°C/min. The glass transition temperature (Tg) of the specimen was measured during the heating process.

(4) Refractive index

In Production Examples 1 to 5, the refractive index was measured using a Kalnew refractometer ("KPR-200" manufactured by Kalnew Optical Industrial Co., Ltd.). A resin formed article having a size of 40×40×3.0 mm was used as a specimen, and the refractive index of the specimen with respect to light having a wavelength of 587.6 nm was measured at 25°C.

The difference in refractive index (ΔnD) with regard to the resin composition was calculated using the above expression.

(5) Residue on ignition test

The pellets (intermediate product) obtained in each example and comparative example were used as a measurement specimen, and subjected to a residue on ignition test in accordance with the Test Methods for Plastic Containers specified in the Japanese Pharmacopoeia.

(6) Light transmittance

A specimen (thickness: 3.0 mm) obtained in each example and comparative example using an injection forming method was subjected to measurement of the light transmittance (optical path length: 3 mm) with respect to light having a wavelength of 450 nm using a UV-Vis-NIR spectrophotometer ("V-570" manufactured by JASCO Corporation).

(7) Charpy impact test

A (notched) specimen (thickness: 4.0 mm, length: 80.0 mm, width: 10.0 mm) obtained in each example and comparative example using an injection forming method was subjected to a Charpy impact test in accordance with JIS K 7111-1.

(8) Drop impact test

A bottle-like specimen obtained in each example and comparative example using a blow forming method was charged with purified water, sealed by tightening a cap, and allowed to stand for 1 hour at a temperature of 23°C and a humidity of 50%. The specimen was repeatedly dropped in the vertical direction from a height of 1.8 m in a state in which the bottom of the specimen was situated on the lower side to determine the drop count at which cracks occurred. In Tables 1 and 2, the value "10" with regard to the drop impact test means that cracks did not occur after the specimen was dropped ten times, and each value with regard to the drop impact test that is less than "10" indicates the drop count at which cracks occurred.

(9) Oil resistance test

NIVEA Cream (registered trademark, manufactured by Nivea-Kao, Co., Ltd.) was applied to the outer surface of a bottle-like specimen obtained in each example and comparative example using a blow forming method, and the specimen was allowed to stand at 40°C for 24 hours to observe the presence or absence of cracks. The oil resistance of the specimen was evaluated in accordance with the following standard. Good: No cracks were observed.
Bad: Cracks were observed.

(10) Medical compatibility

The medical compatibility of the resin formed article was evaluated from the viewpoint of the formability (blow formability) of the resin composition, the residual ratio of the resin composition (i.e., whether or not the resin composition has a residual ratio of 0.10 wt% or less) when analyzed based on the residue on ignition test method, and the transparency of the resin composition (i.e., whether or not the light transmittance of the resin composition is 55% or more) (i.e., properties that are required when producing a medical resin formed article). A case where all of these properties were acceptable was evaluated as "Good", and a case where at least one of these properties was unacceptable was evaluated as "Bad".

Production Example 1

A reactor was charged with dehydrated cyclohexane (500 parts), 1-hexene (0.82 parts), dibutyl ether (0.15 parts), and triisobutylaluminum (0.30 parts) at room temperature under a nitrogen atmosphere. After mixing the mixture, tricyclo[4.3.0.1$^{2,5}$]deca-3,7-diene (trivial name: dicyclopentadiene, hereinafter abbreviated as "DCP") (76 parts), 8-methyltetracyclo[4.4.0.1$^{2,5}$.1$^{7,10}$]dodec-3-ene (hereinafter abbreviated as "TCD") (70 parts), tetracyclo[7.4.0.0$^{2,7}$.1$^{10,13}$]trideca-2,4,6,11-tetraene (hereinafter abbreviated as "MTF") (54 parts), and tungsten hexachloride (0.7% toluene solution) (80 parts) were continuously added dropwise to the mixture at 45°C respectively over 2 hours to effect a ring-opening polymerization reaction.

The ring-opening polymerization reaction was terminated by adding butyl glycidyl ether (1.06 parts) and isopropyl alcohol (0.52 parts) to the reaction mixture. The polymerization conversion ratio of each monomer determined by analyzing the reaction mixture by gas chromatography was 99.5%.

Cyclohexane (270 parts) was added to the resulting reaction mixture (100 parts). After the addition of a nickel catalyst supported on diatomaceous earth (nickel content: 58 wt%, pore volume: 0.25 mL/g, specific surface area: 180 $m^2/g$) (hydrogenation catalyst) (5 parts) to the resulting mixture, hydrogen was introduced into the system until the pressure reached 5 MPa. A hydrogenation reaction was then effected at 200°C for 8 hours with stirring.

After filtering the reaction mixture to remove the hydrogenation catalyst, cyclohexane and other volatile components were removed from the filtrate at a temperature of 270°C under a pressure of 1 kPa or less using a cylindrical evaporator (manufactured by Hitachi Ltd.) to obtain a hydrogenated ring-opening polymer (cycloolefin resin (1)).

The cycloolefin resin (1) was extruded in a molten state in the shape of a strand using a melt extruder, cooled, and pelletized.

The resulting pellets were analyzed, and it was found that the hydrogenation rate achieved by the hydrogenation reaction was 99.8%, and the cycloolefin resin (1) had a weight average molecular weight (Mw) of 34,000, a glass transition temperature (Tg) of 135°C, a specific gravity of 1.01 $g/cm^3$, and a refractive index of 1.5345.

Production Example 2

A reaction vessel in which the internal atmosphere had been replaced by nitrogen, was charged with dehydrated n-hexane (456.1 mL) and dehydrated butyl chloride (656.5 mL). After cooling the reaction vessel to -70°C, an isobutylene monomer (196 mL) (2,425 mmol), p-dicumyl chloride (0.929 g) (4.0 mmol), and N,N-dimethylacetamide (1.22 g) (14 mmol) were added to the reaction vessel. After the addition of titanium tetrachloride (8.67 mL) (79.1 mmol) to the reaction vessel, the resulting mixture was stirred to effect a polymerization reaction at -70°C.

When 1.5 hours had elapsed from the start of the reaction, a monomer solution (including a styrene monomer (124 g) (1,194 mmol), n-hexane (23.9 mL), and butyl chloride (34.3 mL)) that had been cooled to -70°C was added to the reaction vessel. When 45 minutes had elapsed after the addition of the monomer solution, methanol (about 40 mL) was added to the reaction vessel to terminate the polymerization reaction.

After evaporating the solvent and the like from the reaction mixture under reduced pressure, the residue was dissolved in toluene. The resulting toluene solution was washed with water twice, and added to a large quantity of methanol to precipitate a polymer (styrene-based thermoplastic elastomer (1)), which was filtered off, and dried at 60°C for 24 hours under vacuum.

The styrene-based thermoplastic elastomer (1) had a weight average molecular weight (Mw) of 70,000, included a styrene block and an isobutylene block in a weight ratio of 33:67, and had a refractive index of 1.5350.

Production Example 3

A styrene-based thermoplastic elastomer (2) was obtained in the same manner as in Production Example 2, except that p-dicumyl chloride was added in an amount of 1.63 g (7.0 mmol).

The styrene-based thermoplastic elastomer (2) had a weight average molecular weight (Mw) of 40,000, included a styrene block and an isobutylene block in a weight ratio of 33:67, and had a refractive index of 1.5343.

Production Example 4

A styrene-based thermoplastic elastomer (3) was obtained in the same manner as in Production Example 2, except that p-dicumyl chloride was added in an amount of 4.33 g (19 mmol).

The styrene-based thermoplastic elastomer (3) had a weight average molecular weight (Mw) of 15,000, included a styrene block and an isobutylene block in a weight ratio of 33:67, and had a refractive index of 1.5341.

Production Example 5

A styrene-based thermoplastic elastomer (4) was obtained in the same manner as in Production Example 2, except that p-dicumyl chloride was added in an amount of 0.325 g (1.4 mmol).

The styrene-based thermoplastic elastomer (4) had a weight average molecular weight (Mw) of 200,000, included a styrene block and an isobutylene block in a weight ratio of 33:67, and had a refractive index of 1.5340.

Example 1

The cycloolefin resin (1) obtained in Production Example 1 (90 parts), the styrene-based thermoplastic elastomer (1) obtained in Production Example 2(10 parts), an antioxidant (pentaerythrityl tetrakis[3-(3,5-di-t-butyl-4-hydroxyphenyl)propionate]) (0.5 parts), and an acid scavenger (magnesium oxide) (0.3 parts) were mixed using a blender, and dried at 70°C for 6 hours under vacuum (0.1 hPa). The mixture was mixed (kneaded) at 270°C using a twin-screw mixer (in which the internal atmosphere inside the hopper had been replaced by nitrogen), extruded, and pelletized.

The resulting pellets were injection-formed at a resin temperature of 265°C and a die temperature of 60°C to form a preform having a total length of 145.4 mm, a maximum outer diameter of 29.7 mm, and a thickness of 4.7 mm. The preform was drawn (stretched) (longitudinal draw ratio: 1.55, transverse draw ratio: 2.00) using a blow forming device ("EFB-1000ET" manufactured by Frontier inc.) (preform heating temperature: 178°C, blow time: 2.10 sec, cycle time: 5.26 sec) to produce a blow-formed article. The drop impact test and the oil resistance test were performed using the blow-formed article.

The pellets were injection-formed at a resin temperature of 265°C and a die temperature of 120°C to prepare a light transmittance measurement specimen and a Charpy impact test specimen, which were respectively subjected to the above tests.

Example 2

Pellets and a resin formed article were obtained, and each test was performed in the same manner as in Example 1, except that the cycloolefin resin (1) was used in a ratio of 80 parts, and the styrene-based thermoplastic elastomer (1) was used in a ratio of 20 parts.

Example 3

Pellets and a resin formed article were obtained, and each test was performed in the same manner as in Example 1, except that the cycloolefin resin (1) was used in a ratio of 70 parts, and the styrene-based thermoplastic elastomer (1) was used in a ratio of 30 parts.

Example 4

Pellets and a resin formed article were obtained, and each test was performed in the same manner as in Example 2, except that the styrene-based thermoplastic elastomer (2) (20 parts) was used instead of the styrene-based thermoplastic elastomer (1).

Comparative Example 1

Pellets and a resin formed article were obtained, and each test was performed in the same manner as in Example 1, except that the cycloolefin resin (1) was used in a ratio of 99 parts, and the styrene-based thermoplastic elastomer (1) was used in a ratio of 1 part.

Comparative Example 2

Pellets and a resin formed article were obtained, and each test was performed in the same manner as in Example 1, except that the cycloolefin resin (1) was used in a ratio of 60 parts, and the styrene-based thermoplastic elastomer (1) was used in a ratio of 40 parts.

Comparative Example 3

Pellets and a resin formed article were obtained, and each test was performed in the same manner as in Example 2, except that the styrene-based thermoplastic elastomer (3) (20 parts) was used instead of the styrene-based thermoplastic elastomer (1).

Comparative Example 4

Pellets were obtained in the same manner as in Example 2, except that the styrene-based thermoplastic elastomer (4) (20 parts) was used instead of the styrene-based thermoplastic elastomer (1). However, the desired resin formed article could not be obtained using the resulting pellets since the melt viscosity was too high.

TABLE 1

| | | | Example | | | |
|---|---|---|---|---|---|---|
| | | | 1 | 2 | 3 | 4 |
| Ratio (parts) | | Cycloolefin resin (1) | 90 | 80 | 70 | 80 |
| | | Styrene-based thermoplastic elastomer (1) Mw: 70,000 | 10 | 20 | 30 | - |
| | | Styrene-based thermoplastic elastomer (2) Mw: 40,000 | - | - | - | 20 |
| | | Styrene-based thermoplastic elastomer (3) Mw: 15,000 | - | - | - | - |
| | | Styrene-based thermoplastic elastomer (4) Mw: 200,000 | - | - | - | - |
| Difference in refractive index ($\triangle$nD) | | | -0.0005 | -0.0005 | -0.0005 | +0.0002 |
| Residual ratio (%) of resin composition when subjected to residue on ignition test | | | 0.08 | 0.08 | 0.08 | 0.08 |
| Light transmittance (%) | | | 84 | 74 | 64 | 78 |
| Charpy impact strength (kJ/m$^2$) | | | 6 | 13 | 30 | 11 |
| Drop impact test | | | 10 | 10 | 10 | 10 |
| Oil resistance test | | | Good | Good | Good | Good |
| Medical compatibility | | | Good | Good | Good | Good |

TABLE 2

| | | | Comparative Example | | | |
|---|---|---|---|---|---|---|
| | | | 1 | 2 | 3 | 4 |
| Ratio (parts) | | Cycloolefin resin (1) | 99 | 60 | 80 | 80 |
| | | Styrene-based thermoplastic elastomer (1) Mw: 70,000 | 1 | 40 | - | - |
| | | Styrene-based thermoplastic elastomer (2) Mw: 40,000 | - | - | - | - |
| | | Styrene-based thermoplastic elastomer (3) Mw: 15,000 | - | - | 20 | - |
| | | Styrene-based thermoplastic elastomer (4) Mw: 200,000 | - | - | - | 20 |
| Difference in refractive index ($\triangle$nD) | | | -0.0005 | -0.0005 | +0.0004 | +0.0005 |
| Residual ratio (%) of resin composition when subjected to residue on ignition test | | | 0.08 | 0.08 | 0.08 | 0.08 |
| Light transmittance (%) | | | 93 | 54 | 77 | 68 |
| Charpy impact strength (kJ/m$^2$) | | | 2 | 47 | 4 | 16 |
| Drop impact test | | | 1 | 10 | 5 | |
| Oil resistance test | | | Bad | Good | Bad | |
| Medical compatibility | | | Good | Bad | Good | Bad |

The following were confirmed from the results listed in Tables 1 and 2.

In Examples 1 to 4, a bottle-like resin formed article could be obtained using a blow forming method.

The resin formed articles respectively obtained using the resin compositions of Examples 1 to 4 rarely break when dropped, exhibit excellent oil resistance, and can suitably be used for medical applications.

On the other hand, the resin formed articles of Comparative Examples 1 and 3 easily break when dropped, and exhibit poor oil resistance.

Since the resin formed article of Comparative Example 2 exhibited poor transparency, the resin formed article of Comparative Example 2 is not suitable for medical applications.

Since the resin composition of Comparative Example 4 exhibited poor formability, the resin composition of Comparative Example 4 cannot be blow-formed to have the desired shape.

**Claims**

1. A resin formed article obtained by forming a resin composition that comprises a cycloolefin resin and a styrene-based thermoplastic elastomer,
the styrene-based thermoplastic elastomer having a weight average molecular weight (Mw) of 20,000 to 150,000, and having a difference in refractive index (ΔnD) of more than -0.002 to less than +0.002 with respect to the cycloolefin resin, the refractive indices of the cycloolefin resin and the styrene-based thermoplastic elastomer being measured by applying light having a wavelength of 587.6 nm at 25°C,
the resin composition having a residual ratio of 0.10 wt% or less when analyzed based on the residue on ignition test method specified in the Japanese Pharmacopeia,
the resin composition having a light transmittance (optical path length: 3 mm) of 55% or more with respect to light having a wavelength of 450 nm when the resin composition is formed in a shape of a sheet having a thickness of 3.0 mm, and subjected to light transmittance measurement, and
the resin composition having a Charpy impact strength of 5 to 40 $kJ/m^2$ when the resin composition is formed to have a thickness of 4.0 mm, a length of 80.0 mm, and a width of 10.0 mm, and subjected to the notched Charpy impact test specified in JIS K 7111-1 at 23°C.

2. The resin formed article according to claim 1, wherein the styrene-based thermoplastic elastomer is a block copolymer or a hydrogenated product thereof, the block copolymer comprising a block (A) that comprises a repeating unit derived from a styrene-based monomer, and a block (B1) that comprises a repeating unit derived from isobutylene, or a block (B2) that comprises a repeating unit derived from a conjugated diene-based monomer.

3. The resin formed article according to claim 1 or 2, wherein the resin composition comprises the cycloolefin resin and the styrene-based thermoplastic elastomer in a weight ratio (cycloolefin resin: styrene-based thermoplastic elastomer) of 98:2 to 40:60.

**Patentansprüche**

1. Harzformartikel, erhalten durch Bilden einer Harzzusammensetzung, die ein Cycloolefinharz und ein thermoplastisches Elastomer auf Styrolbasis umfasst,
wobei das thermoplastische Elastomer auf Styrolbasis ein gewichtsmittleres Molekulargewicht (Mw) von 20.000 bis 150.000 aufweist und einen Brechungsindexunterschied (ΔnD) von mehr als -0,002 bis weniger als +0,002 in Bezug auf das Cycloolefinharz aufweist, wobei die Brechungsindizes des Cycloolefinharzes und des thermoplastischen Elastomers auf Styrolbasis durch Anwendung von Licht mit einer Wellenlänge von 587,6 nm bei 25°C gemessen werden,
wobei die Harzzusammensetzung ein Restverhältnis von 0,10 Gew.-% oder weniger aufweist, wenn sie auf Grundlage des in der japanischen Pharmakopöe spezifizierten Glührückstand-Testverfahrens analysiert wird,
wobei die Harzzusammensetzung eine Lichtdurchlässigkeit (optische Weglänge: 3 mm) von 55 % oder mehr in Bezug auf Licht mit einer Wellenlänge von 450 nm aufweist, wenn die Harzzusammensetzung in die Form eines Blattes mit einer Dicke von 3,0 mm gebracht und einer Lichtdurchlässigkeitsmessung unterzogen wird, und
wobei die Harzzusammensetzung eine Charpy-Schlagzähigkeit von 5 bis 40 $kJ/m^2$ aufweist, wenn die Harzzusammensetzung so geformt wird, dass sie eine Dicke von 4,0 mm, eine Länge von 80,0 mm und eine Breite von 10,0 mm aufweist, und dem in JIS K 7111-1 spezifizierten Kerbschlagzähigkeitstest nach Charpy bei 23°C unterzogen wird.

2. Harzformartikel nach Anspruch 1, wobei das thermoplastische Elastomer auf Styrolbasis ein Blockcopolymer oder ein hydriertes Produkt davon ist, wobei das Blockcopolymer einen Block (A), der eine Wiederholungseinheit umfasst, die von einem Monomer auf Styrolbasis abgeleitet ist, und einen Block (B1), der eine Wiederholungseinheit umfasst, die von Isobutylen abgeleitet ist, oder einen Block (B2), der eine Wiederholungseinheit umfasst, die von einem Monomer auf Basis eines konjugierten Diens abgeleitet ist, umfasst.

3. Harzformartikel nach Anspruch 1 oder 2, wobei die Harzzusammensetzung das Cycloolefinharz und das thermoplastische Elastomer auf Styrolbasis in einem Gewichtsverhältnis (Cycloolefinharz: thermoplastisches Elastomer auf Styrolbasis) von 98:2 bis 40:60 umfasst.

**Revendications**

1. Article formé en résine obtenu par formage d'une composition de résine qui comprend une résine cyclooléfinique et un élastomère thermoplastique à base de styrène,
l'élastomère thermoplastique à base de styrène ayant un poids moléculaire moyen en poids (Mw) de 20 000 à 150 000, et ayant une différence d'indice de réfraction ($\Delta$nD) de plus de -0,002 à moins de +0,002 par rapport à la résine cyclooléfinique, les indices de réfraction de la résine cyclooléfinique et de l'élastomère thermoplastique à base de styrène étant mesurés en appliquant une lumière ayant une longueur d'onde de 587,6 nm à 25 °C,
la composition de résine ayant un rapport résiduel de 0,10 % en poids ou moins lorsqu'elle est analysée sur la base du procédé d'essai de résidu d'incinération spécifié dans la Pharmacopée japonaise,
la composition de résine ayant une transmittance de la lumière (longueur du chemin optique : 3 mm) de 55 % ou plus par rapport à une lumière ayant une longueur d'onde de 450 nm lorsque la composition de résine est formée sous la forme d'une feuille ayant une épaisseur de 3,0 mm, et soumise à une mesure de la transmittance de la lumière, et
la composition de résine ayant une résistance au choc selon Charpy de 5 à 40 kJ/m$^2$ lorsque la composition de résine est formée pour avoir une épaisseur de 4,0 mm, une longueur de 80,0 mm, et une largeur de 10,0 mm, et soumise à l'essai de résilience de Charpy avec entaille spécifié dans JIS K 7111-1 à 23 °C.

2. Article formé en résine selon la revendication 1, dans lequel l'élastomère thermoplastique à base de styrène est un copolymère séquencé ou un produit hydrogéné de celui-ci, le copolymère séquencé comprenant une séquence (A) qui comprend un motif répétitif dérivé d'un monomère à base de styrène, et une séquence (B1) qui comprend un motif répétitif dérivé d'isobutylène, ou une séquence (B2) qui comprend un motif répétitif dérivé d'un monomère à base de diène conjugué.

3. Article formé en résine selon la revendication 1 ou 2, dans lequel la composition de résine comprend la résine cyclooléfinique et l'élastomère thermoplastique à base de styrène en un rapport pondéral (résine cyclooléfinique/élastomère thermoplastique à base de styrène) de 98/2 à 40/60.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10095881 A
- JP 2004156048 A
- WO 2014087935 A1
- WO 2013030944 A1
- WO 2014034200 A1
- JP 2011202085 A
- JP H1121413 A
- JP 2008208361 A
- US 5468803 A
- JP 2012097146 A
- JP 7179575 A

**Non-patent literature cited in the description**

- *J. Am. Chem. Soc.,* 1986, vol. 108, 733
- *J. Am. Chem. Soc.,* 1993, vol. 115, 9858
- *J. Am. Chem. Soc.,* 1996, vol. 118, 100